# EUROPEAN PATENT APPLICATION

(11) **EP 2 276 264 A2**
(43) Date of publication of application: **19.01.2011**
(21) Application number: 09169778.9
(22) Date of filing: 08.09.2009
(51) Int. Cl.: H04N 13/00

(54) **Method and system for presenting content**

(30) Priority: 09.07.2009 KR 20090062693
(71) Applicant: Ein's I&S Co., Ltd., Gangnam-gu, Seoul 135-924 (KR)
(72) Inventor: Lee, Eun Young, 158-732, Yangcheon-gu, Seoul (KR)
(74) Representative: Beck & Rössig European Patent Attorneys

(57) **Abstract**

A method for presenting content, including arranging two-dimensional content in a three-dimensional virtual scene, wherein the three-dimensional virtual scene represents a three-dimensional space and wherein the two-dimensional content represents an object in the three-dimensional space; changing a view of the three-dimensional virtual scene in response to a user input; and changing the arrangement of the two-dimensional content according to the view change. In an embodiment, first two-dimensional content represents a first face of the object and second two-dimensional content represents a second face of the object. When the view changes, the second two-dimensional content is displayed in place of the first two-dimensional content based on the changed view. In an embodiment, the view of the three-dimensional virtual scene is determined by the location and orientation of a camera and two-dimensional content is arranged to maintain a constant photographing angle between the two-dimensional content and the camera when the camera moves.

## Description

### CROSS-REFERENCE TO RELATED APPLICATION

This application claims the benefit under 35 U.S.C. §119(a) of Korean Patent Application No. 10-2009-0062693, filed on July 9, 2009, which is hereby incorporated by reference in its entirety.

### BACKGROUND

### 1. FIELD

The present invention relates to a system and method for presenting content.

### 2. DESCRIPTION OF THE RELATED ART

With development of the Internet and the proliferation of mobile communication networks, a multimedia age involving Internet web browsers, Internet protocol television (IPTV), mobile communication, digital multimedia broadcasting (DMB), among other network technologies is approaching.

Users access network content via various media devices. For example, users can access the Internet using a desktop personal computer (PC) or a notebook computer using wired or wireless communication technology, a wireless multimedia service (DMB or mobile multimedia service) using a personal digital assistant (PDA) or a mobile phone, and view Internet broadcasts (IPTV) using a television set (TV).

In recent years, the variety of content available is expanding. Accordingly, there is a need for a method and system for efficiently arranging, displaying, or otherwise presenting various content to users.

### BRIEF SUMMARY

The present invention is directed to a method and system for presenting content that is capable of efficiently arranging two-dimensional content in a virtual three-dimensional scene, changing a view of the virtual three-dimensional scene, on which the two-dimensional content have been arranged, and presenting the resultant view to a user.

According to an aspect of an embodiment of the present invention, there is provided a method for presenting content, the method including: arranging two-dimensional content in a three-dimensional virtual scene, wherein the three-dimensional virtual scene represents a three-dimensional space and wherein the two-dimensional content represents an object in the three-dimensional space; changing a view of the three-dimensional virtual scene in response to a user input; and changing the arrangement of the two-dimensional content according to the view change. In an embodiment, first two-dimensional content represents a first face of the object and second two-dimensional content represents a second face of the object. When the view changes, the second two-dimensional content is displayed in place of the first two-dimensional content based on the changed view. In an embodiment, the view of the three-dimensional virtual scene is determined by the location and orientation of a camera and two-dimensional content is arranged to maintain a constant photographing angle between the two-dimensional content and the camera when the camera moves. In an embodiment, the method presents content via a content presenting system.

According to another aspect of an embodiment of the present invention, there is provided a system for presenting content, the system including: a database for storing two-dimensional content; an input module for receiving an input signal to arrange selected two-dimensional content in a three-dimensional virtual scene and receiving a user input to change a view of the three-dimensional virtual scene; an output module for displaying a specific face of the selected two-dimensional content arranged in the three-dimensional scene; and a controller for arranging the selected two-dimensional content in the three-dimensional scene in response to the input signal, changing the view of the three-dimensional virtual scene in response to the user input, and changing the arrangement of the selected two-dimensional content to display the specific face of the selected two-dimensional content according to the view change.

### BRIEF DESCRIPTION OF THE DRAWINGS

The above and other features and advantages of the present invention will become more apparent to those of ordinary skill in the art by describing in detail example embodiments thereof with reference to the attached drawings, in which:
FIG. 1 is a block diagram illustrating a method for presenting content according to an embodiment of the present invention;
FIG. 2 is a block diagram of a content presenting system according to an embodiment of the present invention;
FIG. 3 is a flowchart illustrating a method for presenting content in accordance with an embodiment of the present invention;
FIG. 4 illustrates a method of changing views of a three-dimensional scene based on movement of a virtual camera in accordance with an embodiment of the present invention;
FIG. 5 shows an example screen providing a map interface for view movement in accordance with an embodiment of the present invention;
FIGS. 6A, 6B, and 6C illustrate an example of a change in display of objects in a three-dimensional scene according to a change in a view of the three-dimensional scene in accordance with an embodiment of the present invention;
FIGS. 7A, 7B, and 7C illustrate an example of a change in display of two-dimensional images in a three-dimensional scene with movement of a virtual camera in accordance with an embodiment of the present invention;
FIG. 8 is a flowchart illustrating a method for arranging objects in a three-dimensional scene in accordance with an embodiment of the present invention; and
FIG. 9 illustrates a screen for arrangement of objects and representative content in a three-dimensional scene in accordance with an embodiment of the present invention.

### DETAILED DESCRIPTION

The present invention relates to a system and method for presenting content.

A three-dimensional virtual scene is a computer model of a three-dimensional space. The three-dimensional space can be an actual, physical space, it can be a fictional space created from someone's imagination, or it can be some combination of the two. The three-dimensional virtual scene can include one or more objects arranged in the three-dimensional space. In an embodiment, images of the three-dimensional virtual scene can be presented via an output device. For example, a holographic image of the three-dimensional virtual scene can be projected. In another embodiment, a two-dimensional view of the three-dimensional virtual scene can be displayed on a monitor or other screen. In an embodiment, the view of the three-dimensional virtual scene is determined by the position and orientation of a virtual camera, which is itself an object in the three-dimensional space. As further described below, a computer program can be used to render the view of the virtual camera into the three-dimensional virtual scene. In another embodiment, an actual camera can be used to photograph an actual, physical, three-dimensional space. In an embodiment, a three-dimensional virtual scene is created that represents a brand store.

Objects in the three-dimensional virtual scene can be rendered as two-dimensional images or three-dimensional images.

A three-dimensional image refers to an image in which a perspective view of an object is presented using various techniques including, but limited to, drawing multiple polygons, shading, lighting, etc.

A two-dimensional image refers to a planar image of an object, which can include for example images of the object, a screen on which a moving picture is played, images of other objects or advertisements, among other images. In an embodiment, according to change of a view of the three-dimensional virtual scene, a specific face of the object is shown. For example, a different two-dimensional image can be shown to depict the front face, rear face, bottom face, left-side face, and right-side face of the object. In an embodiment, a front face of the object is shown regardless of the change in view. In another embodiment, different "faces" of the object can include different two-dimensional images. For example, one face of the object can present a moving picture, while another can present a still image of the object, while a third can present an advertisement for the object, and a fourth face can present a still image of a different or related object. In this manner, different information can be presented to the user as the view of the three-dimensional virtual scene changes.

Rendering three-dimensional images is time and processor intensive. Many calculations can be needed to realistically render a three-dimensional object including consideration of shading, coloring, concentration, and the like. In general, two-dimensional images can be rendered more quickly but still present a wealth of information to a viewer.

The subject matter of the present invention is described with specificity to meet statutory requirements. But this description is not intended to limit the scope of this patent. Rather, the inventors have contemplated that the claimed subject matter might also be embodied in other ways, to include different steps or combinations of steps similar to those described in this document, in conjunction with other present or future technologies.

Aspects of the invention can be described in the general context of computer-executable instructions, such as program modules, being executed by a computer. Generally, program modules include routines, programs, objects, components, data structures, etc., that perform particular tasks or implement particular abstract data types. Moreover, those skilled in the art will appreciate that the invention can be practiced with a variety of computer-system configurations, including multiprocessor systems, microprocessor-based or programmable-consumer electronics, minicomputers, mainframe computers, and the like. Any number of computer-systems and computer networks are acceptable for use with the present invention.

Specific hardware devices, programming languages, components, processes, protocols, formats, and numerous other details including operating environments and the like are set forth to provide a thorough understanding of the present invention. In other instances, structures, devices, and processes are shown in block-diagram form, rather than in detail, to avoid obscuring the present invention. But an ordinary-skilled artisan would understand that the present invention can be practiced without these specific details. Computer systems, servers, work stations, and other machines can be connected to one another across a communication medium including, for example, a network or networks.

As one skilled in the art will appreciate, embodiments of the present invention can be embodied as, among other things: a method, system, or computer-program product. Accordingly, the embodiments can take the form of a hardware embodiment, a software embodiment, or an embodiment combining software and hardware. In one embodiment, the present invention takes the form of a computer-program product that includes computer-useable instructions embodied on one or more computer-readable media.

Computer-readable media include both volatile and nonvolatile media, removable and nonremovable media, and contemplate media readable by a database, a switch, and various other network devices. By way of example, and not limitation, computer-readable media comprise media implemented in any method or technology for storing information. Examples of stored information include computer-useable instructions, data structures, program modules, and other data representations. Media examples include, but are not limited to, information-delivery media, RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These technologies can store data momentarily, temporarily, or permanently.

The invention can be practiced in distributed-computing environments where tasks are performed by remote-processing devices that are linked through a communications network. In a distributed-computing environment, program modules can be located in both local and remote computer-storage media including memory storage devices. The computer-useable instructions form an interface to allow a computer to react according to a source of input. The instructions cooperate with other code segments or modules to initiate a variety of tasks in response to data received in conjunction with the source of the received data.

The present invention can be practiced in a network environment such as a communications network. Such networks are widely used to connect various types of network elements, such as routers, servers, gateways, and so forth. Further, the invention can be practiced in a multi-network environment having various, connected public and/or private networks.

Communication between network elements can be wireless or wireline (wired). As will be appreciated by those skilled in the art, communication networks can take several different forms and can use several different communication protocols. And the present invention is not limited by the forms and communication protocols described herein.

The invention is described more fully hereinafter with reference to the accompanying drawings, in which embodiments of the invention are shown. This invention can, however, be embodied in many different forms and should not be construed as limited to the embodiments set forth herein. Rather, these embodiments are provided to fully enable those of ordinary skill in the art to embody and practice the invention.

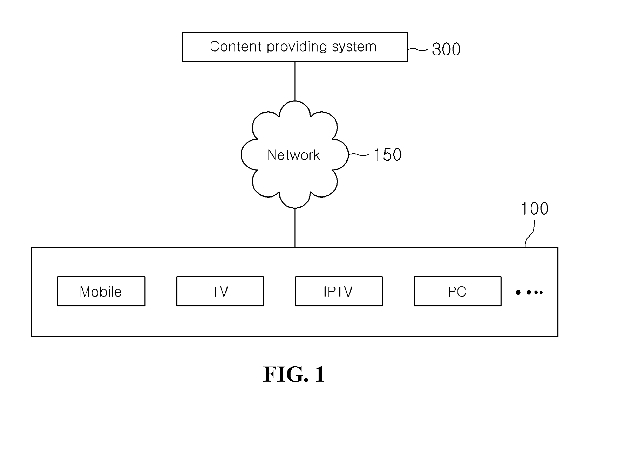

FIG. 1 is a block diagram illustrating a method for presenting content according to an embodiment of the present invention.

As shown in FIG. 1, a media device 100 can be connected over a network 150 to a content presenting system 300. The network 150 refers to a network performing communication via a communication medium, such as the Internet, a wireless communication network, a broadcasting network, etc.

The media device 100 can be a variety of terminals connected to the content presenting system 300. For example, the media device 100 can include a mobile terminal, a television set (TV), an Internet protocol television (IPTV), a desktop PC, and the like. The media device 100 can include a user terminal that receives content and an advertiser terminal that provides content, which are divided into users.

In the embodiment shown, the content presenting system 300 can be accessed via a plurality of media devices 100, including but not limited to a TV, an IPTV, mobile communication, an Internet web browser, digital multimedia broadcasting (DMB), among other media devices. In a further embodiment, the content presenting system 300 can provide content via a plurality of media devices. Presenting content can include displaying and/or transmitting the content.

A TV is a media device for receiving a broadcast signal from a broadcasting station, demodulating the received broadcast signal, and displaying video and sound information. TV can include an analog TV using an analog signal and/or a digital TV using a digital signal.

IPTV includes a service that provides broadcasting channels, video on demand (VOD), bidirectional data service, and the like, through a user terminal via a high-speed network, such as the Internet. In an embodiment, IPTV can be provided using: a component for collecting and processing content from a content provider (CP), a program provider (PP), and the like; a component for determining a format for compressing the content for smooth transmission over the high-speed network; and a component for identifying rights of copyright holders and preventing illegal distribution of the content. In an embodiment, the IPTV is not a simple Internet TV but a media device for transmitting private content. In a further embodiment, the IPTV can be controlled via a simple remote control device.

Mobile communication includes second-generation mobile communication such as Global System for Mobile Telecommunication (GSM), Code Division Multiple Access (CDMA), and the like; third-generation mobile communication such as Wideband Code Division Multiple Access (WCDMA), CDMA2000, High-Speed Downlink Packet Access (HSDPA), and High Speed Uplink Packet Access (HSUPA), and the like; and next-generation mobile communication such as Wibro, Long Term Evolution (LTE), and the like. Mobile communication also includes a medium for transmitting private content for display on a media device, such as on a relatively small screen of a mobile phone or PDA.

Internet web browser refers to a medium for transmitting documents created using a markup language or other technology, such as Hyper Text Markup Language (HTML), Extensible Markup Language (XML), and/or Standard Generalized Markup Language (SGML), using transfer protocol such as Hyper Text Transfer Protocol (HTTP) or Transmission Control Protocol/Internet Protocol (TCP/IP).

Digital Multimedia Broadcasting (DMB), including terrestrial DMB and satellite DMB, refers to a medium for transmitting private content designed for a relatively small screen of a portable DMB terminal.

Throughout this disclosure, content corresponding to a particular media device refers to content optimized for convenient transmission and display on the particular media device. For example, content corresponding to an Internet web browser can be created using a markup language such as HMTL, XML, etc., a scripting language such as java script, and/or an add-in program such as Active X, OCX, etc., and transmitted via TCP/IP. Content corresponding to Mobile Communication can include simple versions of Internet web content for mobile communication terminals, and can be transmitted via wireless communication technology such as Wireless Application Protocol (WAP). Content corresponding to IPTV can include multimedia files encoded using MPEG-2, MPEG-4, WMV-9, H.264, etc. Content corresponding to DMB can include multimedia files encoded using MPEG-2 or MPEG-4, which have a relatively smaller capacity than for IPTV, or other file formats.

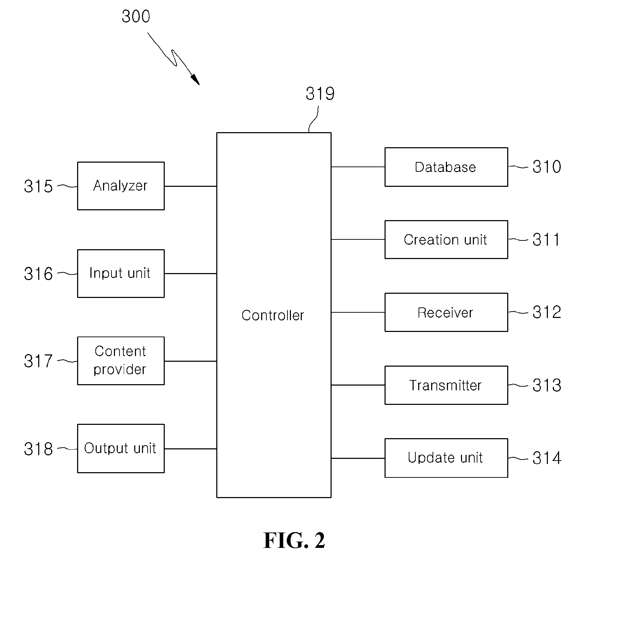

FIG. 2 is a block diagram of a content presenting system 300 according to an embodiment of the present invention. The content presenting system 300 can include a database 310, a creation module 311, a receiver 312, a transmitter 313, an update module 314, an analyzer 315, an input module 316, a content provider 317, an output module 318, and a controller 319. In other embodiments, some of components of the content presenting system 300 can be omitted or others can be added..

In an embodiment of the present invention, the database 310 includes one or more computer-readable media for storing various information. For example, specific brand content can be stored in the database 310. The brand content can include content related to specific brands, including content related to brand names, content related to goods, and the like. For example, the specific brand content can include articles about specific brands, moving pictures, images, detailed product information, articles about products, images of products, moving pictures of products, among other information. The specific brand content can be implemented as a two-dimensional image or a three-dimensional image, as discussed above.

In an embodiment of the subject invention, brand content can be classified according to specific criteria and stored in the database 310. For example, the brand content can be classified according to provided media. The brand content can also be classified by the corresponding media device for presenting the brand content, for example TV content, mobile content, IPTV content, Internet web content, etc. In an embodiment, content is classified based on the corresponding media device to handle different play-back requirements of different media devices.

In an embodiment, the brand content is classified according to a creator of the content and stored in the database 310. Content creators can include a brand advertiser, an operator of the content presenting system, users provided with brand content, among other possible content creators. A brand advertiser refers to a seller who sells specific brand goods. An operator refers to a person who operates the content presenting system 300. A user refers to any person who uses the content presenting system 300 including, but not limited to, a creator, an advertiser, or a person presented with the brand content through the content presenting system 300. Accordingly, the content presenting system 300 can receive content via various routes and provide the content to users.

In an embodiment of the present invention, brand content is stored in the database 310 in terms of brand content or goods. The brand content can be divided into objects, and the divided objects and specific codes associated with the divided objects can be stored in the database 310.

In addition to brand content, information for a user behavior pattern or reaction information to the brand content can also be stored in the database 310. The information for a user behavior pattern can include content usage information, content creation information, content advertisement information, product purchase history related to specific content, brand search history, among other behavior pattern information. Reaction information to brand content can include the number of searches for such content, the number of downloads of such content, the number of links to such content, the number of comments on such content, the number of edits related to such content, among other information related to brand content.

An image of a store related to a specific brand can also be stored in the database 310. The stored image can include two and three-dimensional images.

In an embodiment of the subject invention, the creation module 311 creates content or implements a brand store using a specific source. The specific source can include objects constituting the contents or the brands store. The objects can be divided objects. For example, when an article about a specific brand is formed of an image and text, both the image and the text can be divided objects. The image can also be divided into a first image area and a second image area, and the first image area and the second image area can also be divided objects.

In a further embodiment, using content created corresponding to a first media device, the creation module 311 can create content corresponding to a second media device. For example, the creation module 311 can create content suitable for a mobile environment using content created for a PC.

In an embodiment, the creation module 311 provides a template that enable the user to edit brand content in terms of objects. In a particular embodiment, the creation module 311 provides a plurality of templates, which can be selected by the user.

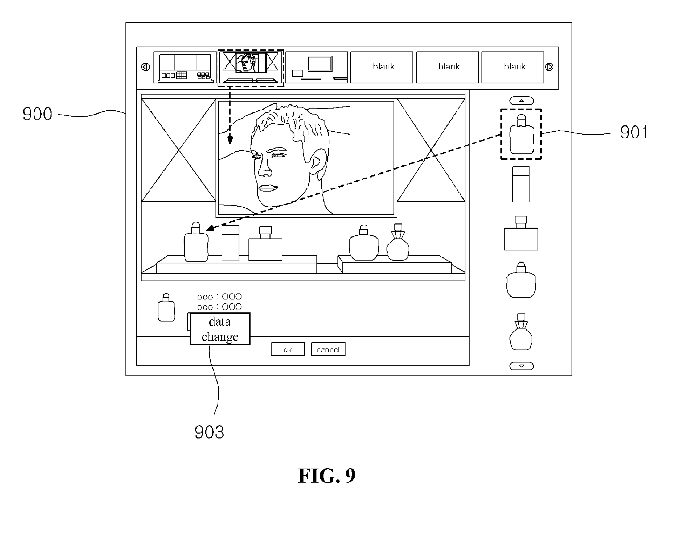

The creation module 311 can also provide an arrangement screen to a user through the output module 318, which will be described below with reference to FIG. 9, so that specific content can be arranged in a specific brand store. The user creates a brand store. The specific content can include two-dimensional content and/or three-dimensional content. The specific content can be displayed as one or more three-dimensional images. The specific content can also be displayed as one or more two-dimensional images, which can include for example images of goods, a screen on which a moving picture is played, images of advertisements, etc.

In an embodiment of the subject invention, the receiver 312 can receive various signals and/or content. For example, the receiver 312 can receive an access signal from a media device or brand content from an advertiser or user. In an embodiment, a received access signal is delivered to and analyzed by the controller 319. The controller 319 can analyze the access signal to determine the type of the media device, location information for the media device, or user information for the media device. In a further embodiment, the controller 319 determines whether to permit the media device to access the system 300 based on the analyzed information. When access is permitted, the content presenting system 300 can perform data communication with media device.

In an embodiment, the receiver 312 includes a reception path (not shown) corresponding to a media device. For example, a mobile access signal can be received along a first reception path, an Internet-web access signal along a second reception path, and a TV access signal along a third reception path. Thus, the receiver 312 can receive data from the media device along a reception path corresponding to the media device or type of media device.

In an embodiment of the subject invention, the transmitter 313 transmits brand content stored in the database 310 or link information for viewing the brand content stored in the database 310 to an external space. The external space refers to a space other than the content presenting system 300. For example, the external space can include a user terminal, an advertiser terminal, a specific web site (or a specific web server), or an external user space. The term "external user space" refers to a user-associated space provided by a system external to the content presenting system 300. For example, the external space can include a homepage, a blog, E-mail, etc.

In an embodiment, the transmitter 313 transmits specific data (e.g., brand content or link information) in consideration of the media device connected to the content presenting system 300 under control of the controller 319. For example, the transmitter 313 can transmit mobile content to the mobile terminal and TV content to the TV.

In an embodiment, the transmitter 313 includes a transmission path (not shown) corresponding to a connected media device. For example, mobile data can be transmitted along a first transmission path, Internet web data along a second transmission path, and TV data along a third transmission path.

In an embodiment of the subject invention, when new brand content is registered in a specific area of the content presenting system 300, the update module 314 updates the registered new brand content in other areas associated with the specific area. Accordingly, when the new content is registered in a first area, the update module 314 updates the new content in a second area associated with the first area. The first area and the second area can be spaces in the content presenting system 300. In an embodiment, when brand content stored in the content presenting system 300 is updated, the controller 319 can notify the user of the update. In an embodiment of the subject invention, the analyzer 315 analyzes behavior history of the user to produce a user behavior pattern. For example, the analyzer 315 can analyze information fed back from a media device, such as information received from an Internet URL, an IPTV operating system, or a mobile communication system. In another embodiment, the analyzer 315 can take note of the number of times specific brand content was used. In an embodiment of the subject invention, the analyzer 315 can analyze reaction to the content and produce content reaction information. For example, content reaction information can include the number of searches for particular brand content, the number of downloads of such content, the number of links to such content, the number of comments on such content, the number of edits related to such content, among other information related to such content.

In an embodiment of the subject invention, the input module 316 receives user input for a brand or content search (e.g., a specific brand content search). For example, the input module 316 can receive a search keyword from the user to search for a specific brand name or specific content.

In an embodiment of the subject invention, the content provider 317 provides brand content to the user classified according to creators of the content. The content creators can include a brand advertiser, an operator of the content presenting system 300, a user provided with brand content, and the like. In an embodiment, an advertiser can create brand content for his or her goods advertisement. In an embodiment, an operator can create brand content to publicize brand content of a specific advertiser to the user. In an embodiment, a user can create new brand content by editing or reprocessing the provided brand content.

In an embodiment, the content provider 317 can provide virtual brand stores related to a specific brand and presenting specific brand goods to the user. The term "brand store" refers to a specific location in cyber-space, where specific brand goods can be represented by two-dimensional (2D) or (three-dimensional) 3D images.

According to an embodiment of the present invention, a brand store and brand content can be output on a specific page in an electronic book related to a specific brand. For the purpose of this disclosure, the term "electronic book" refers to a virtual book through which a user can view specific information or content. The user can access a specific brand store by entering the electronic book. The electronic book can further include a page on which a user can view brand content classified according to creators. Accordingly, the user can select a specific brand and view a brand store and brand content through an electronic book related to the selected brand.

In an embodiment, the brand content provided through an electronic book can be downloaded or linked to the external space by user selection. In a further embodiment, the selected content can be downloaded or linked in its entirety or the content can be divided into objects and specific divided objects can be downloaded or linked to the external space.

In an embodiment of the subject invention, the output module 318 outputs a screen including various information. For example, the output module 318 displays a screen showing a search result matching the input search keyword, a store screen for a brand content search, a specific-brand content playing screen, and the like.

In an embodiment of the subject invention, the controller 319 organically controls functions performed by the database 310, the creation module 311, the receiver 312, the transmitter 313, the update module 314, the analyzer 315, the input module 316, the content provider 317, or the output module 318.

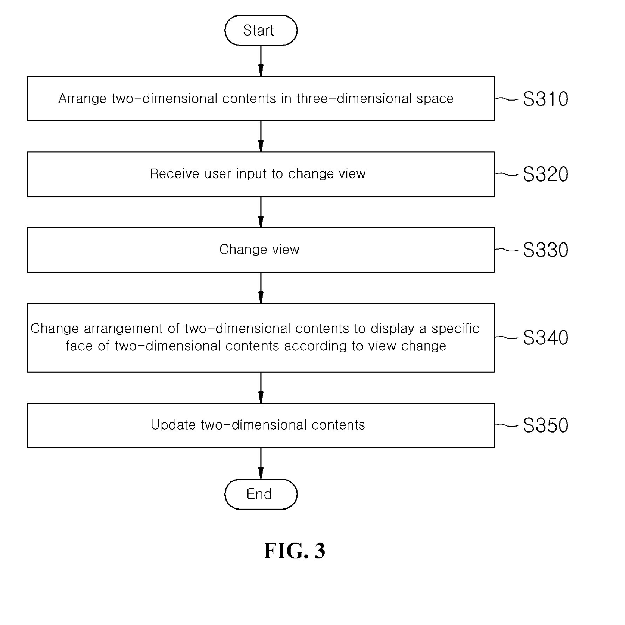

FIG. 3 is a flowchart illustrating a method for presenting content in accordance with an embodiment of the present invention. In a particular embodiment, the method for presenting content includes arranging two-dimensional content in a three-dimensional virtual space representing a brand store and presenting the brand store to a user.

In an embodiment, an input module, such as the input module 316, receives an input signal from a user (or a user's terminal) to arrange objects in a three-dimensional space. In response to the input signal, the controller 319 can arrange the objects in the three-dimensional space (S310). In an embodiment, the "arrangement" focuses on a selected area of the store or other three-dimensional space. The "arrangement" can include controlling the display of the selected area of the store or other three-dimensional space, controlling the size of the objects within the three-dimensional space, controlling the positioning of the objects within the three-dimensional space, and controlling the orientation of the objects within the three-dimensional space. In an embodiment, the "arrangement" can include changing the face of the object that is displayed in the view of the three-dimensional scene. As discussed above, the objects and their "faces" can be depicted using one or more two or three-dimensional images.

In an embodiment, the controller 319 controls presentation of an arrangement screen that enables a user to view a brand store where the objects are arranged. The input module 316 can receive input via a user interface corresponding to the arrangement screen. Thus, a WYSIWYG (What You See Is What You Get) style interface can be provided which allows the user to input and view changes as they are made. That is, when the input module 316 receives a user input to change the view, the controller 319 can change the view (S320, S330). The controller 319 can also change the view to enable the user to view a selected area of the store in detail. Other interface styles are known in the art and can be used with the present invention.

In an embodiment of the present invention, a scene is rendered that depicts the three-dimensional space. In an embodiment, the scene can include an image photographed by a camera. The camera can be a physical camera (e.g., a 35 mm camera) with specific performance or specifications. The camera can also be a virtual camera in which the specific performance or specifications are implemented using a computer program. Implementation of the image photographed by the camera into the scene can provide a consistent view to the user. Accordingly, a screen displayed according to view change can correspond to an image changed with movement of the camera.

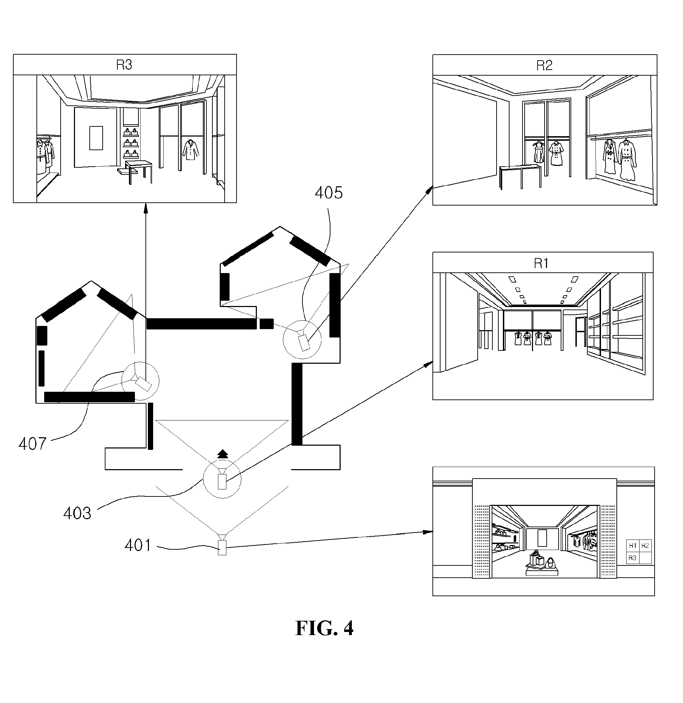

FIG. 4 illustrates a method of changing views of a three-dimensional scene based on movement of a virtual camera in accordance with an embodiment of the present invention. The camera 401 is a virtual camera in which specific performance or specifications are implemented using a computer program. FIG. 4 is intended to explain the view change conceptually.

As shown in FIG. 4, the virtual camera 401 can be moved with a user input to change the view. That is, the user can input the signal to change the view using a specific input module (e.g., a navigation key) of the user terminal 100. When the input signal to change the view is received via the input module 316, the controller 319 can change the view in response to the input signal.

For example, in response to the user input to change the view, the virtual camera 401 can be moved to a first view location 403, a second view location 405, and a third view location 407. The controller 319 can change the view with the movement of the virtual camera 401. For example, when the virtual camera 401 is located at the first view location 403, the controller can output a first view R1 of the brand store, when the virtual camera 401 is located at the second view location 405, the controller can output a second view R2 of the brand store, and when the virtual camera 401 is located at the third view location 407, the controller can output a third view R3 of the brand store. The first view R1, the second view R2, and the third view R3 can be output via the output module 318.

In an embodiment of the present invention, a movement path for the virtual camera 401 can be previously established. For example, the virtual camera 401 can be set to be located at an entrance area of a specific area (e.g., R1, R2, and R3) of the store in response to the input signal from the user to change the view.

In an embodiment of the present invention, a map interface for view movement is provided that allows a user to move the virtual camera 401, and thereby change the view presented of the three-dimensional scene, by selecting locations displayed on a map of the represented three-dimensional space. In an embodiment, the interface includes a plurality of predetermined camera locations that the user can select.

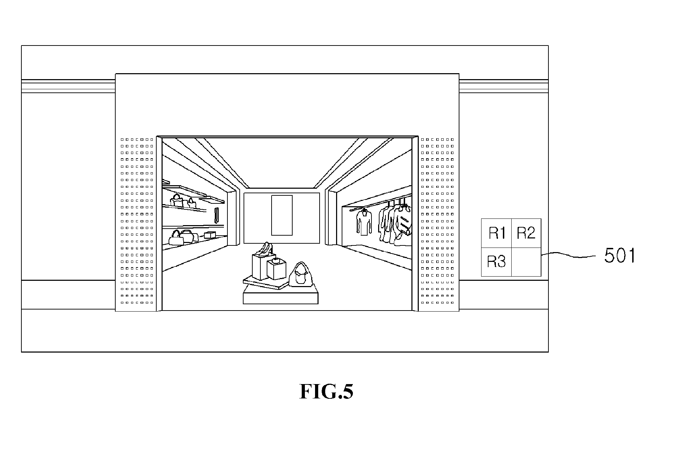

FIG. 5 shows an example screen providing a map interface for view movement in accordance with an embodiment of the present invention.

As shown in FIG. 5, in an embodiment of the present invention, the controller 319 can output a specific area of a brand store corresponding to a specific view through the output module 318. In this case, the content presenting system 300 can provide a map interface that schematically represents the brand store, in order to enable the user to conveniently move the camera throughout the store and thereby change the view presented to a user. The map interface can be displayed in the form of a mini map 501 in an area of a screen. Camera locations or areas of the store (e.g., R1, R2, and R3) to which the view can move are indicated in the mini map 501. Accordingly, when the user selects a specific camera location, the controller 319 can chagne the view to the area selected by the user. The mini map 501 enables the user to quickly and conveniently view a specific area of the brand store. In a further embodiment, a schematic structure of the brand store is included in the mini map 501.

As described above, in an embodiment of the present invention, the virtual camera 401 (not shown in FIG. 5) can move in response to the user input for view movement (resulting from a selection of a specific area on the mini map 501). For example, when the user selects the first space R1 in the mini map 501, the controller 319 can move the virtual camera 401 to an entrance area of the first space R1. An image photographed at the entrance area of the first space R1 can be a location-changed view.

Also, the method for presenting content according to an embodiment of the present invention allows display of two-dimensional content to be changed according to the view change. As further discussed below, in an embodiment of the present invention, the controller 319 can control displaying a specific face (e.g., a front face) of objects in the three-dimensional scene according to the view change (S340).

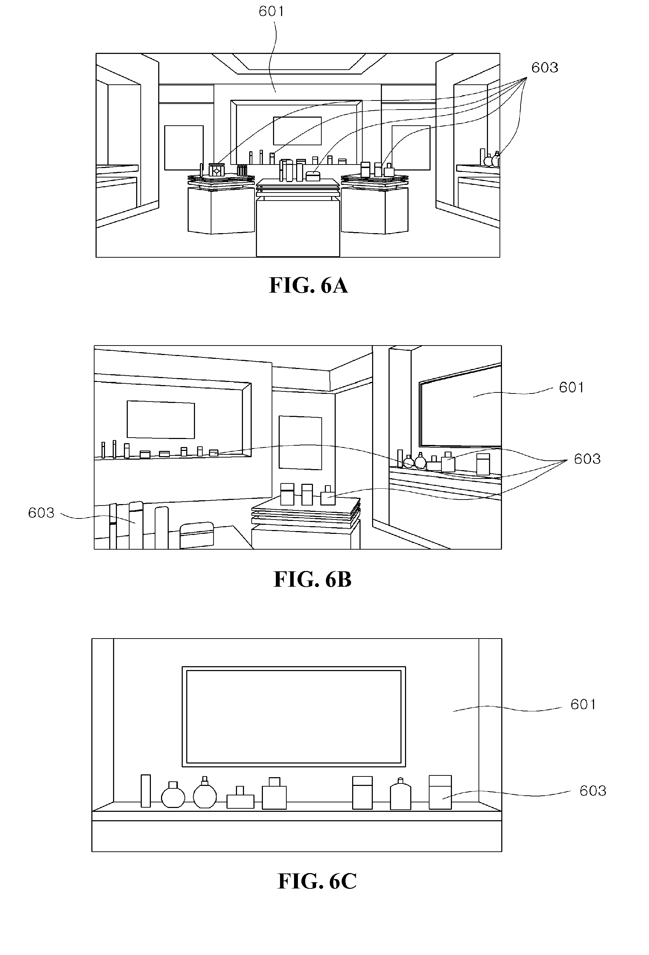

FIGS. 6A, 6B, and 6C illustrate an example of a change in display of objects in a three-dimensional scene according to a change in a view of the three-dimensional scene in accordance with an embodiment of the present invention.

In FIG. 6A, a view showing a front face of a store that a user enters is shown. On the shown screen, objects 603 are arranged in a specific area of a store 601 presented as a three-dimensional virtual scene. A front face of the objects 603 is displayed.

In FIG. 6B, a screen showing a view of the three-dimensional virtual scene of FIG. 6A with the camera moved to the right is shown. The controller 319 can change the display of the objects 603 according to the view change. For example, the controller 319 can control displaying the front face of the objects 603 according to the view change. In an embodiment, a different face of one or more of the objects 603 is displayed based on the view change and the new location and orientation of the camera.

In FIG. 6C, a screen showing a view of the three-dimensional virtual scene of FIG. 6B with the camera moved further to the right is shown. The controller 319 can change the display of the objects 603 according to the view change. For example, the controller 319 can control displaying the front face of the objects 603 according to the view change. In an embodiment, a different face of one or more of the objects 603 is displayed based on the view change and the new location and orientation of the camera.. In an embodiment, one or more of the objects 603 are represented as a "line" in the view. In such a view, the two-dimensional content 603 are not viewed three-dimensionally. Thus, the display can be changed so that the front face of the objects 603 is displayed according to the view change as shown in FIGS. 6A-C, thereby three-dimensionally representing two-dimensional content arranged in the three-dimensional scene.

In an embodiment of the present invention, the view can be changed with the movement of the virtual camera 401.

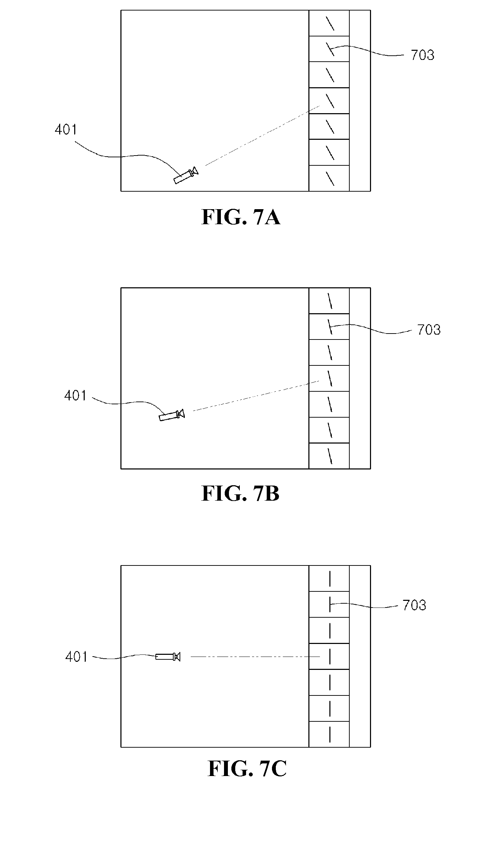

FIGS. 7A, 7B, and 7C illustrate an example of a change in display of two-dimensional images in a three-dimensional scene with movement of a virtual camera in accordance with an embodiment of the present invention.

In FIGS. 7A-C, the virtual camera 401 moves while drawing a circle clockwise from a lower left end. The controller 319 can control the display of the two-dimensional images 703 so that a front face of the two-dimensional images 703 is photographed even when the virtual camera 401 moves. That is, the controller 319 can control a photographing angle between the virtual camera 401 and the two-dimensional images 703 to be constant.

In an embodiment of the present invention, the display of objects disposed in a store (a three-dimensional virtual space) can be updated based on a changed view of the store. In an embodiment, different content is displayed based on the changed view. In an embodiment, different two-dimensional content is displayed (S350). For example, at an earlier time first two-dimensional content can be displayed to represent an object disposed in the store. Later, second two-dimensional content can be displayed to represent the same object in the store. In an embodiment, the first and second two-dimensional content can be created with substantially the same size and then stored to make the two-dimensional content consistent in the store. When the first and second two-dimensional content are created with substantially the same size, an update process can be performed more quickly. If the first and second two-dimensional content have different sizes, it may be necessary to adjust the size of the second two-dimensional content in the content update process. This can increase an update time.

In an embodiment, the two-dimensional content can be updated more quickly and conveniently than the three-dimensional content. The update into the three-dimensional content requires three-dimensional rendering while the update into two-dimensional content does not. Accordingly, the latter can be performed quickly and conveniently. Three-dimensional rendering refers to giving a three-dimensional effect so that a specific object can be three-dimensionally displayed. For example, a three-dimensional rendering process produces a three-dimensional, realistic image on a two-dimensional picture in consideration of shading, coloring, concentration and the like appearing differently depending on external information such as shape, location, illumination and the like.

In an embodiment of the present invention, the creation module 311 can provide a store creator with a screen enabling a user to arrange objects and representative content in a three-dimensional virtual space representing a brand store. With the screen, the store creator can conveniently create and arrange such content. In an embodiment, two-dimensional and/or three-dimensional content are used to represent the objects in the store. In a further embodiment, only two-dimensional content is used to save processing time.

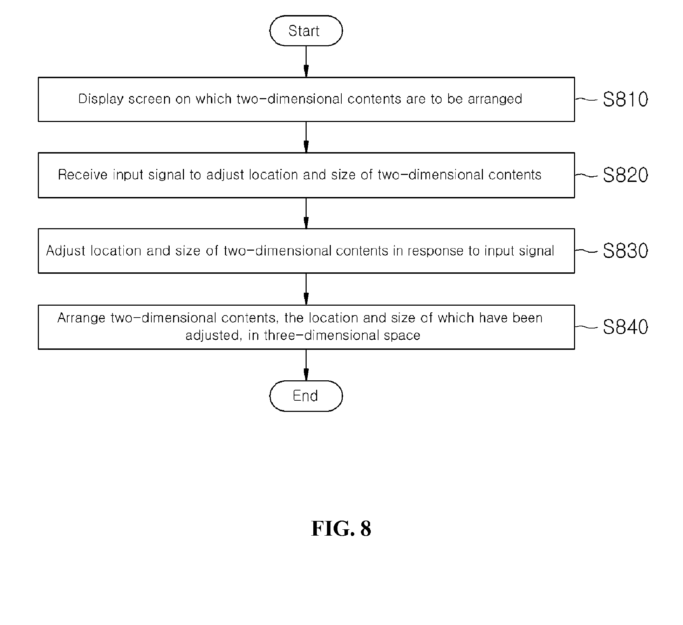

FIG. 8 is a flowchart illustrating a method for arranging objects in a three-dimensional scene in accordance with an embodiment of the present invention.

The creation module 311 can provide a brand store creator with the screen for content arrangement. The screen for content arrangement can be output via the output module 318 (S810). A specific area of a three-dimensional store including an area where objects and representative content are to be arranged can be displayed on the screen. Accordingly, the creation module 311 can provide the creator with an interface that enables the creator to create content while viewing the specific area of the three-dimensional store. In an embodiment, two-dimensional and/or three-dimensional content are used to represent the objects in the store. In a further embodiment, only two-dimensional content is used to save processing time.

FIG. 9 illustrates a screen for arrangement of objects and representative content in a three-dimensional scene in accordance with an embodiment of the present invention..

A specific area of a brand store and objects and representative content to be arranged in the specific area are displayed on a screen 900. In an embodiment, two-dimensional and/or three-dimensional content are used to represent the objects in the store. In a further embodiment, only two-dimensional content is used to save processing time. In the embodiment shown, various two-dimensional content are displayed on the right side of the screen 900. When a signal for selecting specific two-dimensional content 901 and an input signal for moving the selected two-dimensional content 901 are received from a user, the controller 319 can move the selected two-dimensional content 901 to a selected location in the specific area of the brand store. In an embodiment, a specific input signal input from the user can be used to adjust a size of the selected two-dimensional content 901 (S820, S830). For example, the two-dimensional content 901 selected can be moved and/or sized in response to drag and drop input signals. The two-dimensional content 901 selected can also be adjusted by the drag and drop input signals.

In this disclosure, a drag signal can include a mouse drag and a touch drag. The mouse drag refers to movement while the mouse is clicked, and the touch drag refers to movement of a touched point maintaining contact. Also, a drop signal refers to release of the drag signal. That is, mouse drag refers to release of the click and touch drag refers to release of the touch. The mouse controls discussed here are merely examples of input controls that can be used with the present invention. Other input techniques are known in the art and can be used with the present invention.

When drag and drop input signals for adjusting a location and a size of the selected two-dimensional content 901 are received, the controller 319 can control arranging the two-dimensional content, the location and size of which have been adjusted, in a selected area (S840).

In an embodiment, the screen can be used to select different two-dimensional content to represent different faces of the same object. As discussed above different two-dimensional content can then be displayed based on the view of the store determined by the position and orientation of the virtual camera.

In an embodiment, the user can also select a data change command (903) of the two-dimensional content 901 on the shown screen to modify information for the two-dimensional content 901.

When the two-dimensional content are arranged using the screen as shown in FIG. 9, the content presenting system 300 can provide a user with an output that is identical to the output viewed by the creator of the content during its creation (i.e., a WYSIWYG interface). The method for presenting content according to an embodiment of the present invention can thus allow the creator of the content to conveniently arrange content for viewing in a three-dimensional scene, including the two-dimensional content.

The systems and methods for presenting content are not limited to the configurations and methods of the above-described embodiments. All or some of the embodiments can be selectively combined to form variants of the embodiments.

With the method and system for presenting content according to an embodiment of the present invention, two-dimensional content can be arranged in a three-dimensional virtual scene, thereby presenting a three-dimensional space.

With the method and system for presenting content according to an embodiment of the present invention, the arrangement of two-dimensional content in a three-dimensional virtual scene can be changed according to view change, thereby presenting three-dimensional content.

The above-described methods, systems, and databases can be implemented as computer-readable code in one or more computer-readable media. As is known in the art, data and instructions can be stored in a single computer-readable medium or distributed amongst multiple computer-readable media.

The systems and methods for presenting content are not limited to the configurations and methods of the embodiments described above, and all or some of the embodiments can be selectively combined to yield variants. Many different arrangements of the various components depicted, as well as components not shown, are possible without departing from the spirit and scope of the present invention. Embodiments of the present invention have been described with the intent to be illustrative rather than restrictive. A skilled artisan can develop alternative means of implementing the aforementioned improvements without departing from the scope of the present invention. It will be understood that certain features and subcombinations are of utility and can be employed without reference to other features and subcombinations and are contemplated within the scope of the claims. Not all steps listed in the various figures need be carried out in the specific order described.

While the invention has been shown and described with reference to certain embodiments thereof, it will be understood by those skilled in the art that various changes in form and details can be made therein without departing from the scope of the invention as defined by the appended claims.

## Claims

1. A method for presenting content using a content presenting system, comprising:
arranging first two-dimensional content in a three-dimensional virtual scene, wherein the three-dimensional virtual scene represents a three-dimensional space and wherein the first two-dimensional content represents an object in the three-dimensional space;
changing a view of the three-dimensional virtual scene in response to a user input; and
changing the arrangement of the first two-dimensional content according to the view change.

2. The method of claim 1, further comprising:
updating the first two-dimensional content into second two-dimensional content, wherein the first two-dimensional content represents a first face of the object and the second two-dimensional object represents a second face of the object.

3. The method of claim 2, wherein changing the view comprises:
providing a map interface for view movement; and
moving the view to a point selected through the map interface.

4. The method of claim 2, wherein the view is an image photographed by a camera.

5. The method of claim 2, wherein the first and second two-dimensional content are substantially the same size when displayed.

6. The method of claim 1, wherein arranging the first two-dimensional content comprises:
displaying a screen on which the first two-dimensional content are to be arranged;
receiving drag and drop input signals; and
adjusting a size and a location of the first two-dimensional content in response to the drag and drop input signals.

7. The method of claim 2, wherein each of the first and second two-dimensional content comprises at least one of a goods image, a screen on which a moving picture is played, and an image of an advertisement.

8. The method of claim 1, wherein the changing the view of the three-dimensional virtual scene or the changing the arrangement of the first two-dimensional content is preformed via the content presenting system.

9. One or more computer-readable media having computer-useable instructions embodied thereon for performing a method of presenting content, comprising:
arranging first two-dimensional content in a three-dimensional virtual scene, wherein the three-dimensional virtual scene represents a three-dimensional space and wherein the first two-dimensional content represents an object in the three-dimensional space;
changing a view of the three-dimensional virtual scene in response to a user input; and
changing the arrangement of the first two-dimensional content according to the view change.

10. The media of claim 9, the method further comprising:
updating the first two-dimensional content into second two-dimensional content, wherein the first two-dimensional content represents a first face of the object and the second two-dimensional object represents a second face of the object.

11. The media of claim 10, wherein the view is an image photographed by a camera.

12. The media of claim 10, wherein the first and second two-dimensional content are substantially the same size when displayed.

13. The media of claim 10, wherein each of the first and second two-dimensional content comprises at least one of a goods image, a screen on which a moving picture is played, and an image of an advertisement.

14. A system for presenting content, comprising:
a database for storing content to be presented;
an input module for receiving an input signal to arrange first two-dimensional content in a three-dimensional virtual scene and receiving a user input to change a view of three-dimensional virtual scene, wherein the three-dimensional virtual scene represents a three-dimensional space and wherein the first two-dimensional content represents an object in the three-dimensional space;
an output module for displaying the first two-dimensional content arranged in the three-dimensional scene; and
a controller for arranging the first two-dimensional content in the three-dimensional scene in response to the input signal, changing the view in response to the user input, and changing the arrangement of the first two-dimensional content according to the view change.

15. The system of claim 14, further comprising:
an update module for updating the first two-dimensional content into second two-dimensional content, wherein the first two-dimensional content represents a first face of the object and the second two-dimensional object represents a second face of the object.

16. The system of claim 15, wherein the output module outputs a map interface for view movement and the controller moves the view to a point selected through the map interface.

17. The system of claim 15, wherein the view is an image photographed by a camera.

18. The system of claim 15, wherein the first and second two-dimensional content are substantially the same size when displayed.

19. The system of claim 14, further comprising: a creation module,
wherein the creation module provides a screen on which the first two-dimensional content are to be arranged, through the output module, and
when drag and drop input signals are received through the input module, the controller adjusts a size and a location of the first two-dimensional content in response to the drag and drop input signals.

20. The system of claim 15, wherein each of the first and second two-dimensional content comprises at least one of an image of goods, a screen on which a moving picture is played, and an image of an advertisement.
